# EUROPEAN PATENT APPLICATION

(11) **EP 4 220 356 A1**
(43) Date of publication of application: **02.08.2023**
(21) Application number: 22153697.2
(22) Date of filing: 27.01.2022
(51) Int. Cl.: G06F 3/01, B60K 35/00

(54) **VEHICLE, APPARATUS, METHOD AND COMPUTER PROGRAM FOR OBTAINING USER INPUT INFORMATION**

(71) Applicant: VOLKSWAGEN AG, 38440 Wolfsburg (DE); Seat, S.A., 08760 Martorell (ES)
(72) Inventor: HAAR, Adrian, 30173 Hannover (DE); MORALES FERNANDEZ, Daniel, 08012 Barcelona (ES)
(74) Representative: 2SPL Patentanwälte PartG mbB

(57) **Abstract**

Embodiments relate to a vehicle, an apparatus, a method and a computer program for obtaining user input information. The method (10) for obtaining user input information comprises monitoring (12) a gaze of a user, detecting (14) whether the gaze of the user rests at a user interaction element (300), and activating (16) the user interaction element (300) if it is detected that the gaze of the user rests on the user interaction element (300).

## Description

The present invention relates to the field of augmented reality. Embodiments relate to a vehicle, an apparatus, a method and a computer program for obtaining user input information, more particularly, but not exclusively, to a concept for using a gaze detection for determining user input information in an augmented reality environment.

When using augmented reality (AR) devices, such as AR-Glasses, interaction with the user interface tends to be challenging and there are multiple options to obtain user inputs. One straight forward option is to get user inputs via a user input device, such as a mouse, a keyboard, a joystick or any other handheld device. Such inputs may be tricky and may offer multiple ways of interaction, which generally rely on the hands, either via gestures or external controller devices.

Document US 2021/0122242 A1 discloses a human-machine interaction system for a motor vehicle, which comprises a detection device configured to detect an action of a vehicle occupant and an in-vehicle management system including an interactive device and a processor. The interaction device comprises an operable display area configured to display applications, the processor is communicatively connected to the detection device and is configured to identify identity characteristics of the vehicle occupant and selectively activates the applications in the operable display area according to the action and identity characteristics of the vehicle occupant. In response to detecting that a vector of vehicle occupant's line-of-sight is associated with at least one of a plurality of applications and the association is confirmed through at least one of gesture, voice, and posture within a preset time, the at least one application is activated according to the association and identity of the vehicle's occupant.

In view of the conventional concepts there is a demand for an improved concept for obtaining user input information in an AR-environment. This demand is met by the appended independent claims.

Embodiments are based on the finding that there are situations, in which it is cumbersome to rely on user gestures or user interactions based on physical input devices. Particularly in the field of vehicles, e.g. in a situation on a moving vehicle, where the hands should be on the steering wheel, input methods requiring movements of a user's hand may be suboptimal. It is therefore a finding that gaze activation can be used and embodiments may provide a clear way on how to use the gaze detection for activating user interface elements, even while driving.

Embodiments provide a method for obtaining user input information. The method comprises monitoring a gaze of a user and detecting whether the gaze of the user rests at a user interaction element. The method further comprises activating the user interaction element if it is detected that the gaze of the user rests on the user interaction element. Using the resting of the user's gaze at the interaction element as trigger for the activation keeps the user's hands free. In embodiments the user interaction element may be an activation element for a feature of a device and/or a menu navigation element of a device, for which the user input information is obtained. Examples of such devices are smart devices, such as television, computers, entertainment equipment, smart home equipment, vehicles' displays, etc.

In some embodiments the method is configured to obtain user input information in a vehicle. For example, the input information is obtained from a head-up display or a projection in the wind shield of the vehicle. The user interaction element may be an activation element for a feature of the vehicle and/or a menu navigation element of the vehicle. Embodiments may hence provide an efficient way to obtain user input information in a vehicle.

The monitoring of the gaze of the user may comprise determining a line-of-sight of the user and the detecting may comprise detecting whether the line-of-sight of the user meets the user interaction element. Embodiments may hence provide an easy and effective means for monitoring the gaze of a user.

For example, the method further comprises activating the user interaction element after the gaze of the user has rested on the user interaction element for more than a predetermined time period. Therewith, the time period can be configured to find a balance between a time to activation and a number of wrong or unintended activations.

Moreover, at least in some embodiments the method further comprises indicating an upcoming activation to the user during the predetermined time period, while the gaze of the user rests on the user interaction element. That way, the user perceives a feedback of the respective activation process. Moreover, activations and also incomplete activations can be tracked and evaluated. For example, such data may form a basis for user specific adaptation or optimization of the predetermined time period.

For example, the method comprises indicating a progress of an expiration of the predetermined time period to the user while the gaze of the user rests on the user interaction element. Therewith, the user perceives feedback on the progress of the activation, e.g. how much longer the user needs to gaze at the interaction element for the activation to complete.

The method may comprise displaying the user interaction element on a display of the vehicle or device. Such displays may include, head-up displays, screens in the vehicle, projections in the vehicle, etc. A user may be enabled to activate different interaction elements on different displays or projection areas.

For example, areas or elements of the vehicle or the environment may be used to project interaction elements. The method may then comprise projecting the user interaction element onto a projection surface of the vehicle or any other environment. Therewith, embodiments may enable interactive positioning and arrangement of the interaction elements, for example, a user may adapt an arrangement of interaction elements in the environment, e.g. in the cockpit or cabin of a vehicle, in a living room, kitchen, etc.

Moreover, the user interaction element may be virtually overlayed to the environment. The method may then further comprise displaying the user interaction element on an augmented reality device of the user. Therewith, embodiments may enable an introduction of user interaction elements almost anywhere in the surrounding of the user.

In further embodiments the activating of the user interaction element further comprises indicating to the user that the user interaction element has been activated. Therewith, the status of the interaction element can be efficiently indicated to a user.

The indicating to the user that the user interaction element has been activated may, at least in some embodiments, comprise changing an appearance of the user interaction element. The user can then immediately realize the status of the activation element.

In some embodiments the activating further comprises triggering a function and/or feature of the vehicle or any other device associated with the user interaction element. For example, settings or configuration of the vehicle or device may be changed in embodiments using the described interaction.

Another embodiment is a computer program having a program code for performing a method as described herein, when the computer program is executed on a computer, a processor, or a programmable hardware component.

Another embodiment is an apparatus for obtaining a user input. The apparatus comprises one or more interfaces configured to communicate with one or more components of a vehicle or device and processing circuitry configured to control the one or more interfaces and to perform a method as described herein.

Further embodiments are a vehicle or any device that comprises an embodiment of the apparatus.

Another embodiment is an augmented reality device comprising the apparatus as described herein.

Some examples of apparatuses and/or methods will be described in the following by way of example only, and with reference to the accompanying figures, in which
Fig. 1 shows a block diagram of an embodiment of a method for obtaining user information;
Fig. 2 shows a block diagram of an embodiment of an apparatus for obtaining user information and of an embodiment of a vehicle or device with an apparatus for obtaining user information;
Fig. 3 shows an example of a projection or overlay of a user interaction element in an embodiment;
Fig. 4 shows an example of an activation of a user interaction element in an embodiment;
Fig. 5 shows an example of an activated user interaction element in an embodiment; and
Fig. 6 shows an example of user interaction with an activated user interaction element in an embodiment.

Some embodiments are now described in more detail with reference to the enclosed figures. However, other possible embodiments are not limited to the features of these embodiments described in detail. Other embodiments may include modifications of the features as well as equivalents and alternatives to the features. Furthermore, the terminology used herein to describe certain embodiments should not be restrictive of further possible embodiments.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, e.g., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

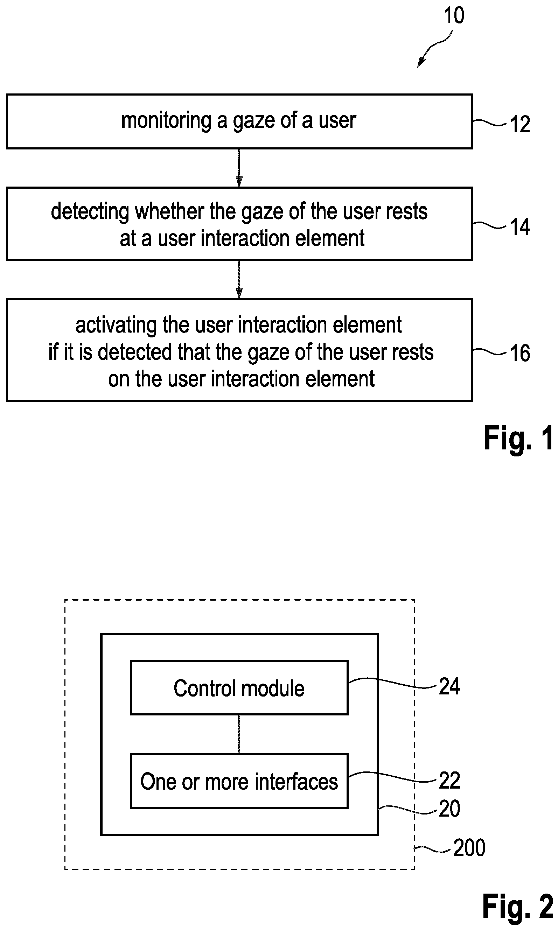

Fig. 1 shows a block diagram of an embodiment of a method 10 for obtaining user input information. The method 10 for obtaining user input information comprises monitoring 12 a gaze of a user and detecting 14 whether the gaze of the user rests at a user interaction element. The method 10 further comprises activating 16 the user interaction element if it is detected that the gaze of the user rests on the user interaction element.

For example, the monitoring 12 comprises determining a line-of-sight of the user by means of image processing and/or eye-ball tracking. There are several known ways for gaze tracking and line-of-sight detection or determination. Furthermore, the detecting 14 may comprise detecting whether the line-of-sight of the user meets the user interaction element. In embodiments, this may be achieved using geometric analysis, e.g. by determining whether a vector or a direction representing the line-of-sight of the user hits or coincides with the user interaction element. If it does, then an according indication may be given to the user and further steps may be taken, such as starting and indicating an activation process. An activation of the user interaction element may be carried out after the gaze of the user has rested on the user interaction element for more than a predetermined time period. The predetermined time period may be 0.5s, 1s, 2s etc. In some embodiments the predetermined time period may be adapted to user preferences.

In further embodiments the method 10 may be configured to obtain user input information in a vehicle. The user may be a driver, a passenger or an occupant of the vehicle. In particular, the vehicle may be a car, a van, a truck, a bus, a bike, an aerial vehicle, a watercraft, or the like. The user interaction element may be an activation element for a feature of the vehicle and/or a menu navigation element of the vehicle, but can be used likewise for any other device and in any other environment.

Fig. 2 shows a block diagram of an embodiment of an apparatus 20 for obtaining user information and of an embodiment of a vehicle or device 200 with an apparatus 20 for obtaining user information. The apparatus 20 comprises one or more interfaces 22, which are configured to communicate with one or more components of a vehicle or device. The apparatus further comprises processing circuitry 24 which is coupled to the one or more interfaces 22. The processing circuitry 24 is configured to control the one or more interfaces 24 and to perform a method as described herein. Fig. 2 further illustrates an embodiment of a vehicle or device 200 comprising an embodiment of the apparatus 20 (shown in dotted lines as being optional from the perspective of the apparatus 20).

The one or more interfaces 22 may be implemented as any means for communicating information, e. g. transmitting, receiving, or transmitting and receiving. For example, the one or more interfaces 22 may correspond to one or more contacts, inputs/outputs, and/or modules to communicate physical signals. The one or more interfaces 22 may comprise a software interface/module and/or an interface to a transmission medium. The one or more interfaces 22 may be configured to take as input and/or provide as output any data that is processed by the processing circuitry 24. The one or more interfaces 22 may enable communication with components of the vehicle or device, e.g. a key, a modem, a server storing information about the vehicle/device, display of the vehicle/device, graphic processor of the vehicle/device, etc.

As further shown in Fig. 2 the respective one or more interfaces 22 are coupled to the processing circuitry 24, which may comprise one or more processors, and which controls the one or more interfaces 22. In examples the processing circuitry 24 may be implemented using one or more processing units, one or more processing devices, any means for processing, such as a processor, processing circuits, a computer or a programmable hardware component being operable with accordingly adapted software. In other words, the described function of the processing circuitry may as well be implemented in software, which is then executed on one or more programmable hardware components. Such hardware components may comprise a general-purpose processor, a Digital Signal Processor (DSP), a micro-controller, central processing unit (CPU), etc.

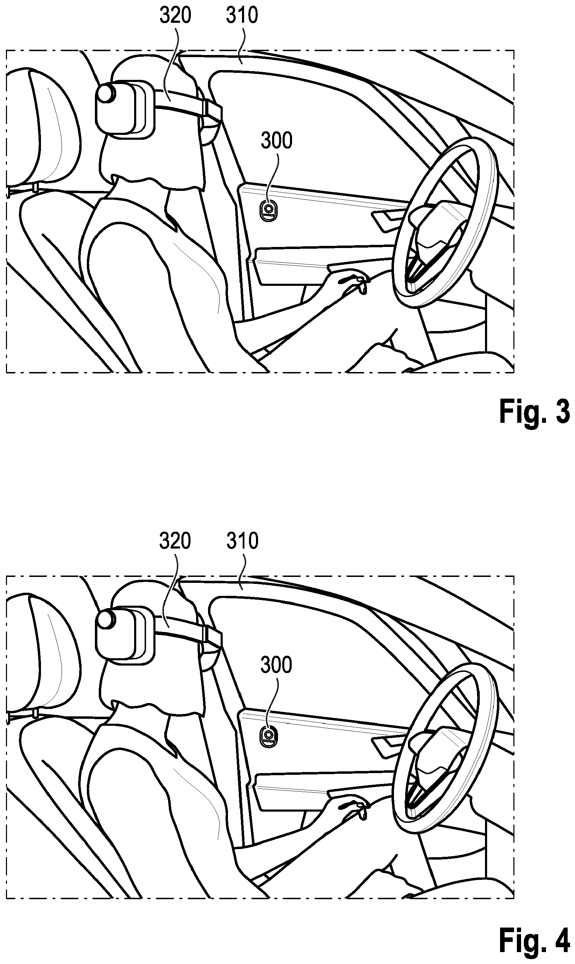

Fig. 3 shows an example of a projection or overlay of a user interaction element 300 in an embodiment. Fig. 3 illustrates the interior of a vehicle's cabin in which the user interaction element 300 is shown on the inside of the open door 310, while the vehicle is parked. The graphical representation of the user interaction element may be projected on the door 310 or it may be overlayed to the user's view using augmented reality glasses 320 as illustrated in Fig. 3.

Fig. 4 shows an example of an activation of a user interaction element in an embodiment. After it has been detected that the gaze of the user rests on the user interaction element 300, the user interaction element 300 is activated. An upcoming activation is indicated to the user during the predetermined time period while the gaze of the user rests on the user interaction element 300. This is done in Fig. 4 by a bar surrounding the graphical object. Furthermore, a progress of an expiration of the predetermined time period is indicated to the user while the gaze of the user rests on the user inter-action element 300. This is indicated in Fig. 4 by the length of the bar surrounding the user interaction element 300. In the embodiment illustrated in Figs. 3, 4, 5 and 6 the user interaction element 300 is displayed on or overlayed by an augmented reality device 320 of the user. In other embodiments displaying of the user interaction element on a display of the vehicle/device and/or projecting the user interaction element onto a projection surface of the vehicle/device may be used.

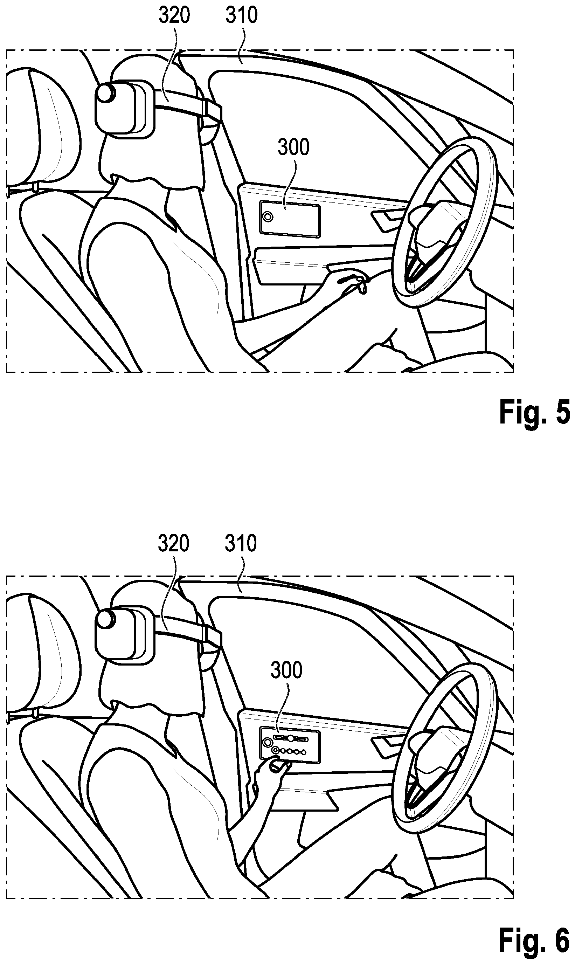

Fig. 5 shows an example of an activated user interaction element 300 in the embodiment. After the activating of the user interaction element 300 has completed it is indicated to the user that the user interaction element 300 has been activated. This is done by a changed appearance of the user interaction element. In the embodiment shown in Fig. 6 the user interaction element 300 now appears as an interactive control element.

Fig. 6 shows an example of user interaction with the activated user interaction element 300 in an embodiment. The activating further comprises triggering a function and/or feature of the vehicle associated with the user interaction element 300, which is the control menu for setting the ambient lights of the vehicle in the present embodiment. As indicated in Fig. 6 it lets the user interact with the menu and takes the setting for the ambient light as input.

Embodiments therefore let a user easily and efficiently enter input information to user devices. In Figs. 3-6 an embodiment in a vehicle was detailed. However, other embodiments would let users interact with other devices like household devices, TVs, computers, any control panels or any projected user interactions elements.

In the embodiment in the vehicle, as compared to touch screens, where the driver would need to move their hands from the steering wheel to interact with the content, the user may interact without using hands in embodiments. In addition, in a future with autonomous driving vehicles, the occupants could be in a position where they would not reach the display, and would therefore find an alternative interaction method with embodiments.

Embodiments may use a timer-based method (the timer setting the predefined time period) combined with a graphical user interface that helps the user activate/open a menu/feature when he/she gazes to that element for a given time, without the need of any other kind of interaction, just using the eyes.

As can be seen in Figs. 3, 4, 5, and 6 the following steps may be performed:
1. For the graphical element it is detected that the user is gazing at it for a short amount of time (predefined time period), to make sure that he/she wants to interact with it.
2. A progress/loading bar is shown to tell the user that the feature is being activated.
3. Once the required gazing time/bar has been completed, the feature/element is activated.
4. The feature/menu/element is opened and ready for the user to be activated.

This interaction approach with gaze could, of course, be used as well for interacting with any digital elements, not necessarily being augmented reality. An example would be the vehicle's infotainment system. Instead of using touch and removing the hand from the steering wheel, the user could quickly gaze to the option he/she wants to interact with on the display following the same principle.

Embodiments may use a timer-based approach for a gaze only activation of an (Augmented Reality) graphical user interface feature/menu.

At least in some embodiments no hand/complex interaction is needed for interacting with augmented reality element, bust just staring at some interaction element for a specified amount of time. Embodiments may provide additional safety for a driving situation where the driver doesn't need to remove the hands from the steering wheel to interact with an augmented reality element. Embodiments may provide an easy and comfortable interaction solution, when the occupant of the vehicle is far away from the content with which he/she wants to interact (like in an autonomous vehicle scenario, where the seat could move backwards).

Embodiments may provide an interaction possibility for vehicles, where a hands-free interaction (gaze only) would make sense, either for safety reasons or just for comfort. In all kinds of devices that display some information and allow the user to interact with it, embodiments may be used.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### List of reference signs

- 10: method for obtaining user input information
- 12: monitoring a gaze of a user
- 14: detecting whether the gaze of the user rests at a user interaction element
- 16: activating the user interaction element if it is detected that the gaze of the user rests on the user interaction element
- 20: apparatus
- 22: one or more interface
- 24: processing circuitry

- 200: vehicle/device

- 300: user interaction element
- 310: door
- 320: augmented reality device

## Claims

1. A method (10) for obtaining user input information, the method (10) comprising
monitoring (12) a gaze of a user;
detecting (14) whether the gaze of the user rests at a user interaction element (300);
activating (16) the user interaction element (300) if it is detected that the gaze of the user rests on the user interaction element (300).

2. The method (10) of claim 1, wherein the method (10) is configured to obtain user input information in a vehicle and wherein the user interaction element (300) is an activation element for a feature of the vehicle and/or a menu navigation element of the vehicle.

3. The method (10) of one of the claims 1 or 2, wherein the monitoring (12) comprises determining a line-of-sight of the user and wherein the detecting (14) comprises detecting whether the line-of-sight of the user meets the user interaction element (300).

4. The method (10) of one of the claims 1 to 3, further comprising activating the user interaction element (300) after the gaze of the user has rested on the user interaction element (300) for more than a predetermined time period.

5. The method (10) of claim 4, further comprising indicating an upcoming activation to the user during the predetermined time period while the gaze of the user rests on the user interaction element (300).

6. The method (10) of claim 5, further comprising indicating a progress of an expiration of the predetermined time period to the user while the gaze of the user rests on the user interaction element (300).

7. The method (10) of one of the claims 1 to 6, further comprising displaying the user interaction element (300) on a display of a vehicle or device.

8. The method (10) of one of the claims 1 to 7, further comprising projecting the user interaction element (300) onto a projection surface.

9. The method (10) of one of the claims 1 to 8, further comprising displaying the user interaction element (300) on an augmented reality device (320) of the user.

10. The method (10) of one of the claims 1 to 9, wherein the activating of the user interaction element (300) further comprises indicating to the user that the user interaction element (300) has been activated.

11. The method (10) of claim 10, wherein the indicating to the user that the user interaction element (300) has been activated comprises changing an appearance of the user interaction element (300).

12. The method (10) of one of the claims 1 to 11, wherein the activating further comprises triggering a function and/or feature associated with the user interaction element (300).

13. A computer program having a program code for performing a method (10) according to any one of claims 1 to 12, when the computer program is executed on a computer, a processor, or a programmable hardware component.

14. An apparatus (20), comprising:
one or more interfaces (22) configured to communicate with one or more components of a vehicle or device; and
processing circuitry (24) configured to control the one or more interfaces (22) and to perform a method (10) according to any of claims 1 to 12.

15. A vehicle (200) comprising the apparatus (20) according to claim 14.
